(19) Europäisches Patentamt
European Patent Office
Office européen des brevets

(11) Publication number: **0 162 611 B1**

(12) **EUROPEAN PATENT SPECIFICATION**

(45) Date of publication of patent specification: **31.07.91** (51) Int. Cl.5: **C09D 5/02**, C09D 133/00

(21) Application number: **85302968.4**

(22) Date of filing: **26.04.85**

# (54) Aqueous compositions for producing an alkali-soluble temporary protective coating.

(30) Priority: **16.05.84 GB 8412434**

(43) Date of publication of application:
**27.11.85 Bulletin 85/48**

(45) Publication of the grant of the patent:
**31.07.91 Bulletin 91/31**

(84) Designated Contracting States:
**BE DE FR GB IT LU NL SE**

(56) References cited:
EP-A- 0 013 698
FR-A- 2 400 527
US-A- 4 071 645
EP-A- 0 082 931
US-A- 4 017 662
US-A- 4 241 141

(73) Proprietor: **IMPERIAL CHEMICAL INDUSTRIES PLC**
**Imperial Chemical House, Millbank**
**London SW1P 3JF(GB)**

(72) Inventor: **Coombes, Norman Arthur**
**4, Ostler Gate Pinkneys Green**
**Maidenhead Berkshire(GB)**
Inventor: **Nicks, Peter Francis**
**34, Switchback Road North**
**Maidenhead Berkshire(GB)**
Inventor: **Young, Gillian Anne**
**Apartment 22, 494 Avenue Road**
**Toronto Ontario(CA)**

(74) Representative: **Cooper, Alan Victor et al**
**Imperial Chemical Industries PLC Legal Department: Patents P.O. Box 6 Bessemer Road**
**Welwyn Garden City Hertfordshire AL7 1HD(GB)**

**EP 0 162 611 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an aqueous alkali-soluble temporary protective coating composition suitable for spraying onto a surface liable to deteriorate through exposure to weather or abrasion.

Many surfaces are liable to deteriorate when they are exposed directly to the atmosphere, for example due to humid conditions. These surfaces may be, for example, of finished articles or of articles which are at an intermediate or semi-finished stage of manufacture and to which it is not appropriate to apply a permanent coating in order to prevent deterioration. Typical surfaces which are liable to deteriorate are those comprising a ferreous metal such as steel and galvanised steel, copper and aluminium whether painted or unpainted. Deterioration may be due, for example, to the oxidation of a metal surface, for example the rusting of ferreous surfaces or the formation of an oxide layer on an aluminium surface, or to the atmospheric weathering of painted surfaces. Painted or polished surfaces may also be damaged by abrasion, for example at an intermediate stage of manufacture.

Typical materials which have been applied to these surfaces as temporary protective coatings in order to prevent deterioration or damage due to abrasion include oils, greases, waxes and solvent-based lacquers. A temporary protective coating, together with any adhering contamination, may be removed with aqueous alkali when it is no longer required and may, if necessary, then be replaced by a fresh coating suitable to its future use.

Alkali-soluble polymers, particularly carboxyl group-containing addition polymers, are known to be useful as temporary, protective coatings for surfaces. These are usually applied to a surface from a non-aqueous solution or from an aqueous emulsion by spraying. The resulting coating may be subsequently removed by treatment with aqueous alkali, for example an alkaline cleaning solution of conventional formulation. More particularly United States patent 4 017 662 discloses polishes applicable to a surface by means of a cloth, brush or mop where the polish comprises an aqueous dispersion of discrete particles of a carboxylic acid copolymer optionally containing copolymerised non-acidic hydrophilic comonomers. However, aqueous dispersions usually require the presence of surfactants or emulsifiers to maintain the stability of the dispersion and the presence of these in a protective coating makes the coating sensitive to rain and unsuitable for use out of doors.

It has now been discovered that a selected group of addition copolymers can be used to provide temporary coating compositions which have a particularly good balance of properties. These properties include, suitability for use outdoors, absence of flash rusting when drying on ferreous surfaces, ease of removal with aqueous alkaline compositions after a period of at least 4 weeks outdoor exposure to the weather, low dirt retention during exterior exposure and ease of handling and stacking coated articles without damage to the coating. The polymers may also yield clear coatings which permit inspection of the coated surface but these coatings may also be tinted for identification purposes. One specific use of alkali-soluble polymers is in providing temporary protection for a painted surface from the effect of abrasive particles and the like.

Accordingly, this invention provides an aqueous alkali-soluble temporary protective coating composition suitable for spraying onto a surface liable to deteriorate through exposure to weather or abrasion, the composition comprising an aqueous liquid medium containing water, an organic water-miscible cosolvent and a salt of an addition copolymer, which copolymer

a) has a weight average molecular weight in the range 3,000 to 15,000,
b) has a glass transition temperature (Tg) in the range $-15^{\circ}C$ to $+40^{\circ}C$,
c) comprises carboxyl groups equivalent to an acid value in the range 25 to 100 mg KOH/g and
d) comprises residues derivable from one or more hydrophilic co-monomers selected from
  i) acrylamide and derivatives thereof in which the amido nitrogen atom is substituted by a $C_1$ to $C_5$ alkyl group,
  ii) vinyl pyrollidone,
  iii) vinyl pyridine and
  iv) monomers which comprise a poly(oxyethylene) chain of average molecular weight of at least 100

wherein the salt is the ammonium or amine salt of a copolymer containing from 2 to 20 wt% hydrophilic co-monomer residue and the salt is present as a solution in the aqueous liquid medium. Preferably the copolymer is one which has been prepared by solution copolymerisation of the comonomers in an organic liquid and has subsequently been treated with a base and diluted with water.

The copolymer is present in the aqueous medium in the form of a true solution and at least some of the carboxyl groups in the addition copolymer are neutralised by ammonia and/or one or more amines. In most cases, apart from a haze, the addition copolymer will appear to be in solution.

According to another aspect of this invention we provide a method of giving temporary protection to a

surface liable to deteriorate on direct exposure to the weather or to be damaged by abrasion which comprises spraying onto the surface a coating composition as above defined and allowing the volatile material present to volatilise.

According to a further aspect of this invention we provide an article having a surface liable to deteriorate on direct exposure to the weather, or to be damaged by abrasion, the surface having a temporary alkali-soluble coating derived from a coating composition as defined above.

The organic water-miscible cosolvent is a solvent for the addition copolymer, for example an alkanol or an alkyl ether of ethylene glycol or propylene glycol. Suitable water-miscible cosolvents include n-propanol, isopropanol, n-, sec-and isobutanol, ethylene glycol monobutyl ether, propylene glycol monomethyl ether, and the monomethyl ether of dipropylene glycol.

In selecting a suitable aqueous liquid medium it is necessary to consider such factors as the rate of volatilisation of the liquid medium which is desired after application of the composition to a surface; the method of application to the surface, for example whether by spraying or brushing; the solubility and/or stability of the addition copolymer in the medium; the flammability of the medium, and any requirement which is dictated by the nature of the surface, for example the need to dissolve any oil which is on the surface. There may be present a small proportion of a non-water-miscible solvent.

It is often convenient to include as at least part of the aqueous medium of the coating composition the organic solvent in which the addition copolymer has been prepared. In certain cases, however, it may be preferred to remove some or the whole of this solvent and to dissolve or disperse the addition copolymer in a different continuous medium, for example one which is more volatile or one which is of different polarity.

The addition copolymer is prepared from polymerisable, ethylenically unsaturated monomers by conventional procedures using free radical initiators such as azodiisobutyronitrile, and is preferably prepared in solution in organic solvents, for example isopropanol, sec-butanol, ethylene glycol monobutylether or propylene glycol monomethyl ether, which are miscible with both water and with any other desired solvents. When a particular monomer is not soluble in the organic solvent to be used as the polymerisation medium, it may be dissolved in another solvent which is miscible with the organic solvent. For example, (meth)-acrylamide may be dissolved in the minimum proportion of water before addition to the site of polymerisation. The molecular weight of the polymer can be controlled by conventional methods, for example using chain terminating agents such as thioglycollic acid.

Preferably the molecular weight is in the range 5,000 to 14,000.

Preferably the carboxyl groups present in the addition copolymer are introduced by the use of acrylic and/or methacrylic acid as a comonomer although other carboxyl group-containing or carboxyl group-generating monomers may be used, for example maleic anhydride.

It is an advantage of the low molecular weight of the copolymer that treatment with a base does not cause undesired thickening of the composition.

The extent of neutralisation of the copolymer may vary depending upon the specific use intended. When it is desired that a touch-dry or water-resistant coating shall be quickly obtained it is necessary to use a suitably volatile base.

The hydrophilic comonomer residue of the copolymer as defined may be obtained by post-modification of a preformed addition copolymer, for example of a copolymer containing a precursor of the monomer residue which can be converted to yield the defined residue. However the hydrophilic monomer residues are preferably introduced into the copolymer by conventional polymerisation procedures. The monomer residues of, for example, acrylamide, methacrylamide, vinyl pyrollidone and vinylpyridine may be introduced directly by use of these compounds as comonomers. A poly(oxyethylene) chain may be introduced by using a comonomer which includes such a chain in the molecules, for example methoxypoly-(ethyleneglycol)(meth)acrylate, or by post-reacting a group on the preformed copolymer which is reactive with, for example, a polyethylene glycol. Preferably the addition copolymer comprises at least 3% by weight of the hydrophilic comonomer residue.

Particularly preferred hydrophilic comonomer residues in the addition copolymer are comonomer residues of acrylamide and/or methacrylamide, since copolymers according to the invention which contain these residues provide the best balance of properties as temporary coatings on surfaces liable to deterioration, particularly on ferreous surfaces which are liable to rust.

Comonomers which are free from carboxyl groups and which do not comprise the defined hydrophilic residues may additionally be used in preparing the addition copolymer. Such comonomers include the alkyl esters of (meth)acrylic acid, for example methyl methacrylate, ethyl acrylate or butyl acrylate, and aromatic monomers such as styrene or vinyltoluene.

Preferably, in the preparation of the addition copolymer there is used 5-20% by weight of a carboxyl group-containing comonomer, 2-20% of a comonomer which comprises the defined hydrophilic monomer

residue, or a precursor of the residue, and 60-93% of other comonomer(s).

Preferably there is present 3-15% by weight of (meth)acrylamide residues.

The glass transition temperature (Tg) of a coating material is a parameter which frequently presents difficulties in estimation, with different experimental techniques leading to different results. Although it is a function primarily of the composition of the copolymer in respect of the comonomers present and their proportions, other factors such as molecular weight may play a part. For the present purpose, our Tg values are those derived by the use of the expression presented in "Polymer Handbook" by J Brandup and E M Immergut (Interscience, London) namely

$$\frac{100}{\text{Tg (copolymer)}} = \frac{\text{\% monomer A}}{\text{Tg (homopolymer A)}} + \frac{\text{\% monomer B}}{\text{Tg (homopolymer B)}} + \text{etc}$$

For the Tg values of the individual homopolymers we have relied on the values given in this source and the derived calculated values constitute the definition of Tg according to this specification.

The coating compositions of this invention are preferably of solids content in the range 5 to 25% by weight. They may also contain certain additives which will further improve their performance and range of application, for example anti-corrosion additives, flow aids and dyes or pigments.

The methods of application are conventional; for example by spraying, brushing or dipping. The thickness of the coatings obtained is preferably in the range 10 to 20$\mu$, but thinner coatings may be employed, especially on non-corrodible substrates.

It is an important advantage of the present selected addition copolymers for use in coating compositions that the coating which they provide is readily removed from a surface, particularly a bare metal surface, by treatment with aqueous alkali, for example a 1 to 2% solution of caustic alkali in water. It is a particular advantage that the coating can be removed by an alkaline solution such as is conventionally used to clean bare metal articles before they are subjected to a metal pretreatment process such as phosphating. Such articles will often carry a corrosion-resistant oil or wax layer which has to be removed by an alkali treatment. Therefore this invention also provides an improved process of metal pretreatment wherein a metal article to be treated, for example by phosphating, carries a coating of the type herein described and is subjected to an aqueous alkali treatment prior to the reaction of the metal with a pretreatment reagent.

The invention is illustrated by the following Examples in which parts and percentages are by weight.

EXAMPLE 1

This Example describes the preparation in organic solvent solution of a copolymer, comprising methacrylamide as a comonomer, which is suitable for use according to the invention; the preparation therefrom of an aqueous solution; and the use of the solution according to the invention.

(a) Azodiisobutyronitrile (37.5g) was dissolved in a mixture of the monomers methyl methacrylate (262.5g), butyl acrylate (337.5g), methacrylic acid (75.0g), methacrylamide (75.0g) and of isopropanol (350g), and the mixture was added over a period of 3 hours to isopropanol (150g) which was being heated under nitrogen and under reflux so that the reaction mixture was maintained at 80°C. After the addition was complete the product was maintained at 80°C for a further 1 hour, when azodiisobutyronitrile (7.5g) was added and the product further maintained at 80°C for 1 hour.

The final product, a copolymer of weight composition methyl methacrylate/butyl acrylate/methacrylamide = 35/45/10/10 had a solids content of 60.5% by weight (determined by heating for 1 hour at 120°C) and an acid value of 63.8 mg KOH/g. The calculated Tg of the copolymer was 22°C and the molecular weight (weight average determined by GPC) was 9,324.

(b) 33 parts of the solution of copolymer is isopropanol as prepared above were treated with 2 parts of ammonia (specific gravity 0.880) which amount was equivalent to complete neutralisation of the carboxyl groups present. The mixture was stirred until clear and 65 parts of demineralised water were then added to give a slightly hazy solution of copolymer at 20% solids content having a pH of 9.3.

(c) The solution of copolymer prepared in (b) was spray applied to a degreased bare steel panel measuring 15 cm x 10 cm by a double-pass using a conventional air-fed spray gun having an inlet pressure of 70 psi. A touch-dry coating film was formed within 10 minutes at 21°C and there was no sign of "flash-rusting". The final film thickness was 17 microns.

After overnight storage the coating panel was exposed to the weather on a south-facing flat roof. After 4 weeks exposure in Southern England summer conditions the panel showed very little corrosion

and the coating film showed negligible dirt pick up. The coating film was easily removed from the panel after contact with an alkaline remover at room temperature for 2 minutes. The remover composition was sodium hydroxide (1 part) n-butanol (2 parts), hydroxypropylmethyl cellulose (1 part), surfactant (0.1 part) and de-ionised water (60 parts).

(d) The solution of copolymer prepared in (b) was also spray applied by the procedure described in (c) but to a metal panel which had been previously coated with a glossy paint topcoat. The panel was then exposed, at a commercial test site in Florida, USA, at 45° to the horizontal facing south for a period of 3 months. The copolymer coating then showed very little dirt pick-up and had a good gloss. It was easily removed from the paint topcoat after 5 minutes contact at room temperature with the alkaline remover described in (c). The paint topcoat was still very glossy and showed no evidence of dulling or deterioration.

EXAMPLE 2

This Example describes the preparation in an organic solvent (different from that used in Example 1) of a copolymer comprising acrylamide as a comonomer and suitable for use according to the invention; the preparation therefrom of an aqueous solution and the use of the solution according to the invention.

(a) Azodiisobutyronitrile (90g) was dissolved in a mixture of monomers comprising methyl methacrylate (414g), butyl acrylate (1026g) methacrylic acid (180g) and acrylamide (180g), and the mixture was gradually added over a period of 3 hours to propylene glycol monomethylether (commercially available as "Dowanol PM") (1092g) which was being heated under reflux (120 °C). The reaction mixture was maintained at 120 °C, and further quantities of azodiisobutyronitrile (18g) and of propylene glycol monomethylether (54g) were added to the mixture 1 hour after the monomer addition was complete. The resulting product was then held at reflux temperature for a further 1 hour.

The final product, a copolymer of weight composition methyl methacrylate/butyl acrylate/ methacrylic acid/methacrylamide = 23/57/10/10, had a solids content of 60%, and an acid value of 65 mg KOH/g. The calculated Tg of the copolymer was -0.5 °C and the molecular weight (weight average, determined by GPC) was about 10,000.

(b) 36.3 parts of the solution of copolymer in propylene glycol monomethylether as prepared above was treated with 2 parts of ammonia (specific gravity 0.880) which amount was equivalent to complete neutralisation of the carboxyl groups present. The mixture was stirred until clear and 61.7 parts of demineralised water were then added to give a slightly hazy solution of 22% solids content having a pH of 9.5.

(c) The aqueous solution prepared in (b) above was spray applied to a degreased bare steel panel measuring 15 cm x 10 cm by the procedure of Example 1(c). The coating film was touch-dry after 15 minutes at 20 °C and there was no flash-rusting. The final dry film was 20 microns in thickness.

After overnight interior storage, the coating panel was exposed to the weather, facing south, for 4 weeks under Southern England winter conditions. There was very little rust spotting on the panel at the end of this period and the coating was easily removed with an alkaline remover composition similar to that of Example 1(c).

EXAMPLE 3

This Example describes the preparation and use according to the invention of a copolymer similar to that of Example 1 except that there was present only 5% instead of 10%, of methacrylamide as a comonomer.

(a) The copolymer produced in this Example by the procedure of Example 1 was of weight composition methyl methacrylate/butyl acrylate/methacrylic acid/methacrylamide = 25/60/10/5 and was a 58.2% content solution in isopropanol. The calculated Tg of the copolymer was -4.6 °C and the molecular weight (weight average, measured by GPC) was 10,917.

(b) 36.1 parts of the copolymer solution produced in (a) were treated with 2 parts of ammonia (specific gravity 0.880). The mixture was stirred until clear and 61.9 parts of demineralised water were then added with stirring to give a slightly hazy solution of 21% solids having a pH of 9.05.

(c) The aqueous solution prepared in (b) was applied to a bare steel panel by spraying as described in Example 1(c). The coating film produced was touch-dry after 10 minutes at 20 °C and there was no flash-rusting.

After overnight interior storage the panel was exposed to the weather facing south, for 3 months of winter conditions in Southern England. The coating had very little rust spotting after this time and was easily

removed using the alkaline remover described in Example 1(c).

EXAMPLE 4

This Example describes the preparation and use of a copolymer prepared by a process similar to that used in Example 2 except that the comonomer acrylamide was replaced by 5% of a comonomer incorporating a methoxypoly(oxyethylene) moiety of molecular weight 350 and the acid content was halved.

(a) The copolymer produced in this Example by the procedure of Example 2 was of weight composition methyl-methacrylate/butyl acrylate/methacrylic acid/methoxypolyethylene glycol methacrylate - 53/37/5/5, and was a 67.8% solids solution in propylene glycol monomethylether. The acid value of the copolymer was 37.1 mg KOH/g; the calculated Tg of the copolymer was 16° C and the weight average molecular weight of the copolymer was 8,172.

(b) 34.3 parts of the copolymer solution from (a) above were treated with 1 part of ammonia (0.880) and 64.7 parts of demineralised water to give a hazy solution at 20.7% solids and of pH 8.8.

(c) The aqueous solution prepared in (b) was spray applied to a bare steel panel as described in Example 1 to give a dry coating film thickness of 12 microns. After 2 months exposure to summer weather conditions there was very little corrosion of the steel and the film was easily removed after 2 minutes contact with the alkaline remover described in Example 1.

(d) The aqueous solvent solution prepared in (b) was spray applied to and formed a coating film on a panel to which had been previous applied a thermoplastic acrylic paint topcoat. After interior overnight storage the coated panel was exposed for 8 months to Southern England weather conditions during the summer-autumn-winter period. The coating film was dulled but remained intact with little dirt pick-up. It was easily removed using the alkaline remover described in Example 1. The paint topcoat showed excellent gloss retention with no sign of defects in the surface.

COMPARATIVE EXAMPLE

This Example shows that, in the absence of a hydrophilic comonomer as hereinbefore defined, the addition copolymer does not confer on the coating composition the advantageous properties demonstrated in the preceding Examples.

(a) A copolymer was prepared as a solution in isopropanol by the procedure of Example 1, with the weight composition methyl methacrylate/butyl acrylate/methacrylic acid = 46/44/10. The solids content was 61.78% and the copolymer had an acid value of 65 mg KOH/g, a calculated Tg of 17.1° C and a weight-average molecular weight of 14,900.

(b) 33.2 parts of the copolymer solution from (a) were treated with 8.7 parts of a 5% aqueous ammonia solution and 58.1 parts of demineralised water. The slightly hazy solution was of 20.5% solids content and had a pH of 9.3.

(c) The aqueous solution from (b) was spray-applied to a degreased bare steel panel to give a coating of 15 microns thickness.

After overnight interior storage, the panel was exposed to Southern England late summer weather conditions for 1 month. After this period of time there was unacceptable scattered rust spotting over the panel. Using the alkaline remover of Example 1, the removal of the coating film from the panel was incomplete after 2 minutes contact time, there being a residue of copolymer coating.

EXAMPLE 5

This Example describes the preparation and use of a copolymer prepared by a process similar to that used in Example 3, except that the hydrophilic comonomer methacrylamide was replaced with vinyl pyrollidone and the ratio of methyl methacrylate to butyl acrylate was adjusted to give a calculated Tg of -5° C.

(a) The copolymer produced in this Example by the procedure of Example 3 was of weight composition methyl methacrylate/butyl acrylate/methacrylic acid/vinyl pyrollidone = 27.8/57.2/10/5 and was a 55.2% solids content solution in isopropanol. The calculated Tg of the copolymer was -5° C.

(b) 36.2 parts of the copolymer solution produced in (a) were treated with 1.8 parts of ammonia (specific gravity 0.88). The mixture was stirred until clear and 62 parts of demineralised water were then added with stirring to give a slightly hazy solution of 20% solids having a pH of 9.2.

(c) The aqueous solution prepared in (b) was applied to a bare steel panel by spraying as described in Example 1(c). The coating film produced was touch-dry after 10 minutes at 20° C and there was no

flash-rusting. The film thickness was between 11.6 and 13 microns (as determined by Permascope).

After overnight interior storage the panel was exposed to the weather, facing south, for 1 month of autumn conditions in southern England.

The coating had very little rust-spotting after this time and was easily removed using the alkaline remover described in Example 1(c).

EXAMPLE 6

This Example describes the preparation and use of a copolymer prepared by a process similar to that used in Example 3, except that the hydrophilic comonomer methacrylamide was replaced with 4-vinylpyridine and the ratio of methyl methacrylate to butyl acrylate was adjusted to give a Tg of -5° C.

(a) The copolymer produced in this Example by the procedure of Example 3 was of weight composition methyl methacrylate/butyl acrylate/methacrylic acid/4-vinylpyridine = 26.2/57.9/10/5 and was a 57.9% solids content solution in isopropanol. The calculated Tg of the copolymer was -5° C.

(b) 34.5 parts of the copolymer solution produced in (a) were treated with 1.8 parts of ammonia (specific gravity 0.88). The mixture was stirred until clear and 63.7 parts of demineralised water were then added with stirring to give a slightly hazy solution of 20% solids having a pH of 9.5.

(c) The aqueous solution prepared in (b) was applied to a bare steel panel by spraying as described in Example 1(c). The coating film produced was touch-dry after 10 minutes at 20° C and there was no flash-rusting. The film thickness was between 14.5 and 15.5 microns (Permascope).

After overnight interior storage the panel was exposed to the weather, facing south, for 3 months of winter conditions in Southern England.

The coating had very little rust-spotting after this time and was easily removed using the alkaline remover described in Example 1(c) after a 1-minute contact time.

## Claims

**1.** An aqueous alkali-soluble temporary protective coating composition suitable for spraying onto a surface liable to deteriorate through exposure to weather or abrasion, the composition comprising an aqueous liquid medium containing water, an organic water-miscible cosolvent and a salt of an addition copolymer, which copolymer

a) has a weight average molecular weight in the range 3 000 to 15 000,

b) has a glass transition temperature (Tg) in the range -15° C to +40° C,

c) comprises carboxyl groups equivalent to an acid value in the range 25 to 100 mg KOH/g and

d) comprises residues derivable from one or more hydrophilic comonomers selected from

i) acrylamide and derivatives thereof in which the amido nitrogen atom is substituted by a $C_1$ to $C_8$ alkyl group,

ii) vinyl pyrollidone,

iii) vinyl pyridine and

iv) monomers which comprise a poly(oxyethylene) chain of average molecular weight of at least 100

wherein the salt is the ammonium or amine salt of a copolymer containing from 2 to 20 wt% hydrophilic comonomer residue and the salt is present as a solution in the aqueous liquid medium.

**2.** A composition as claimed in Claim 1 wherein the addition copolymer comprises up to about 10 wt% copolymerised methacrylic acid or its equivalent in other copolymerised carboxyl group-containing or carboxyl group-generating comonomers.

**3.** A composition according to Claim 1 wherein the addition copolymer comprises from 3 to 15 wt% of hydrophilic residues derivable from acrylamide or methacrylamide.

**4.** A composition according to any one of Claims 1 to 3 wherein the carboxyl groups present in the addition copolymer are derivable from acrylic acid and/or methacrylic acid.

**5.** A composition according to any one of Claims 1 to 4 wherein the addition copolymer is derived by solution copolymerisation of comonomers in an organic liquid and subsequent treatment with ammonia or amine and dilution with water.

6. A method of giving temporary protection to a surface liable to deteriorate through exposure to the weather or abrasion which comprises spraying onto the surface a coating composition as claimed in any one of Claims 1 to 5.

7. An article having a surface which is provided with an alkali-soluble temporary coating derived from a composition as claimed in any one of Claims 1 to 5.

**Revendications**

1. Composition aqueuse de revêtement protecteur provisoire soluble dans les alcalis, apte à être appliquée par pulvérisation sur une surface susceptible d'être détériorée par exposition aux facteurs atmosphériques ou à l'abrasion, cette composition comprenant un milieu liquide aqueux renfermant de l'eau, un co-solvant organique miscible à l'eau et un sel d'un copolymère d'addition, ledit copolymère
   a) ayant une moyenne en poids du poids moléculaire comprise dans la plage de 3000 à 15 000,
   b) ayant une température de transition vitreuse (Tg) dans la plage de -15 °C à +40 °C,
   c) comprenant des groupes carboxyle équivalant à un indice d'acide dans la plage de 25 à 100 mg de KOH/g, et
   d) comprenant des résidus pouvant être dérivés d'un ou plusieurs comonomères hydrophiles choisis entre
      i) l'acrylamide et ses dérivés dont l'atome d'azote d'amide est substitué par un groupe alkyle en $C_1$ à $C_8$,
      ii) la vinylpyrrolidone ,
      iii) la vinylpyridine et
      iv) des monomères qui comprennent une chaîne poly(oxyéthylénique) d'un poids moléculaire moyen d'au moins 100,

   le sel étant le sel d'ammonium ou d'amine d'un copolymère contenant 2 à 20% en poids de résidu de comonomère hydrophile et le sel étant présent sous forme d'une solution dans le milieu liquide aqueux.

2. Composition suivant la revendication 1, dans laquelle le copolymère d'addition comprend jusqu'à environ 10% en poids d'acide méthacrylique copolymérisé ou son équivalent en d'autres comonomères copolymérisés contenant des groupes carboxyle ou engendrant des groupes carboxyle.

3. Composition suivant la revendication 1, dans laquelle le copolymère d'addition comprend 3 à 15% en poids de résidus hydrophiles pouvant être dérivés d'acrylamide ou de méthacrylamide.

4. Composition suivant l'une quelconque des revendications 1 à 3, dans laquelle les groupes carboxyle présents dans le copolymère d'addition peuvent être dérivés d'acide acrylique et/ou d'acide méthacrylique.

5. Composition suivant l'une quelconque des revendications 1 à 4, dans laquelle le copolymère d'addition est obtenu par copolymérisation en solution de comonomères dans un liquide organique, puis traitement avec l'ammoniac ou une amine et dilution avec de l'eau.

6. Procédé pour protéger provisoirement une surface susceptible d'être détériorée par exposition aux facteurs atmosphériques ou à l'abrasion, qui consiste à appliquer par pulvérisation sur la surface une composition de revêtement suivant l'une quelconque des revendications 1 à 5.

7. Article présentant une surface qui porte un revêtement provisoire soluble dans les alcalis, dérivé d'une composition suivant l'une quelconque des revendications 1 à 5.

**Patentansprüche**

1. Wäßrige, alkalilösliche Zusammensetzung zur Herstellung eines zeitweiligen Schutzbelags, welche sich zum Aufsprühen auf eine Oberfläche eignet, die einer Verschlechterung durch Bewitterung oder Abrieb unterliegt, wobei die Zusammensetzung aus einem wäßrigen flüssigen Medium besteht, das Wasser, ein mit Wasser mischbares organisches Colösungsmittel und ein Salz eines Additionscopolymers enthält, welches Copolymer

a) ein Durchschnittsmolekulargewicht im Bereich von 3000 bis 15 000 aufweist,

b) eine Glasübergangstemperatur (Tg) im Bereich von -15° C bis -40° C besitzt,

c) Carboxylgruppen entsprechend einem Säurewert im Bereich von 25 bis 100 mg KOH/g enthält und

d) Reste aufweist, die sich von einem oder mehreren hydrophilen Comonomeren ableiten, die ausgewählt sind aus

i) Acrylamid und Derivaten davon, bei denen das Amido-Stickstoffatom durch eine $C_{1-8}$-Alkylgruppe substituiert ist,

ii) Vinylpyrrolidon,

iii) Vinylpyridin und

iv) Monomeren mit einer Poly(oxyethylen)-Kette mit einem Durchschnittsmolekulargewicht von mindestens 100,

wobei das Salz das Ammonium- oder Aminsalz eines Copolymers ist, das 2 bis 20 Gew.-% hydrophile Comonomerreste enthält, und wobei das Salz als Lösung in dem wäßrigen flüssigen Medium vorliegt.

2. Zusammensetzung nach Anspruch 1, bei welcher das Additionscopolymer bis zu ungefähr 10 Gew.-% copolymerisierte Methacrylsäure oder ein Equivalent davon in anderen copolymerisierten, Carboxylgruppen enthaltenden oder Carboxylgruppen erzeugenden Comonomeren enthält.

3. Zusammensetzung nach Anspruch 1, bei welcher das Additionscopolymer 3 bis 15 Gew.-% hydrophile Reste enthält, die sich von Acrylamid oder Methacrylamid ableiten.

4. Zusammensetzung nach einem der Ansprüche 1 bis 3, bei welcher die Carboxylgruppen im Additionscopolymer sich von Acrylsäure und/oder Methylacrylsäure ableiten.

5. Zusammensetzung nach einem der Ansprüche 1 bis 4, bei welcher das Additionscopolymer durch Lösungscopolymerisation von Comonomeren in einer organischen Flüssigkeit und anschließende Behandlung mit Ammoniak oder Amin und Verdünnung mit Wasser erhalten worden ist.

6. Verfahren zur Herstellung eines zeitweiligen Schutzbelags auf einer Oberfläche, die einer Verschlechterung durch Bewitterung oder Abrieb unterliegt, bei welchem auf die Oberfläche eine Belagzusammensetzung nach einem der Ansprüche 1 bis 5 aufgesprüht wird.

7. Gegenstand mit einer Oberfläche, die einen alkalilöslichen zeitweiligen Belag trägt, der mit Hilfe einer Zusammensetzung nach einem der Ansprüche 1 bis 5 hergestellt worden ist.